# EUROPEAN PATENT APPLICATION

(11) **EP 0 854 273 A1**
(43) Date of publication of application: **22.07.1998**
(21) Application number: 97310745.1
(22) Date of filing: 31.12.1997
(51) Int. Cl.: F01L 1/26, F01L 1/344, F02D 13/02, F02B 31/08

(54) **Variable valve timing and valve events mechanism for an internal combustion engine**

(30) Priority: 21.01.1997 US 785126
(71) Applicant: Ford Global Technologies, Inc., Dearborn, Michigan 48126 (US)
(72) Inventor: Simko, Aladar Otto, Dearborn Heights, Michigan 48127 (US); Stein, Robert Albert, Saline, Michigan 48176 (US); Patterson, Donald James, Ann Arbor, Michigan 48108 (US)
(74) Representative: Messulam, Alec Moses

(57) **Abstract**

An internal combustion engine combining dual event capability of the intake and exhaust valves (34,36) with dual independent phase shifting of the intake and exhaust camshafts (58,60), along with an associated operating strategy to provide an engine with near optimum performance at all engine operating conditions is disclosed. The dual event capability includes an integrated shafted rocker arm with a long-event rocker arm (38,50) on one side for communication with a long-event cam (59) and a short-event rocker arm (38,48) on the other side for communication with a short-event cam (39) for activating the phased valves at different operating conditions.

## Description

The present invention relates to a variable valve system for operating the intake and exhaust valves of a reciprocating internal combustion engine. More specifically, the present invention relates to a dual duration of the intake and exhaust valve events synergistically combined with independently phase shiftable intake and exhaust camshafts, allowing varying and near optimal actuation of the intake and exhaust valves and an associated operating strategy.

It is well known in the art to vary the valve timing schedules of both the intake and exhaust valves of an internal combustion engine by dual independent phase shifting of the camshafts to obtain more efficient operation during idle, part load, and wide open throttle operating conditions.

For example, it is known that at part load, by utilizing variable timing of the intake valve opening and variable timing of the exhaust valve closing, a variable and/or delayed valve overlap period can be provided. This overlap between opening of the intake valve and the closing of the exhaust valve regulates the exhaust back flow to the cylinder and to the intake port for internal exhaust gas recirculation control (EGR) for reduced NOₓ and HC emissions, as well as for other benefits. Examples of such variable valve timing systems are disclosed in U.S. Patent Nos. 5,161,497, 5,297,508, 5,396,874, 5,419,301, 5,422,811, 5,431,132, 5,467,748, and 5,495,830.

Dual event capability for varying the duration of the valve event of the intake and exhaust valves of an internal combustion engine is also known in the art. Such variable actuation can also improve the efficiency and output capability of the engine as well as provide other benefits. Examples of such varying of valve event durations include U.S. Patent Nos. 5,427,580, 5,437,581, and 5,470,282.

While both of the above applications provide improved operating characteristics, neither by itself can provide optimal valve timings for optimal characteristics. However, when these two independent applications are combined, synergistic effects result due to near optimal valve timings throughout the entire operating range.

Accordingly, it is an object of the present invention to provide a production feasible internal combustion engine with near optimal valve timings for the entire operating range with improved fuel efficiency, output, and emissions.

The disclosed variable valve system in the preferred embodiment utilizes independent phase shifting and dual event capability for both the intake and the exhaust valves together with an associated operating strategy to improve the operating characteristics of the engine. The variable valve system includes a crankshaft mounted within a cylinder block and having one or more banks of cylinders each having a cylinder head.

In the preferred embodiment of the present invention, each cylinder head has two camshafts incorporated therein, one for the actuation of the intake valves and one for the actuation of the exhaust valves. For each cylinder, the intake camshaft includes one short-event and one long-event cam lobe. There is a valve actuator arm mounted on a rocker shaft, the latter being rotatably fixed to the cylinder head. The valve actuating arm extends over the valves in the form of a TEE shape to simultaneously operate both intake valves. There is a short-event cam follower mounted on the rocker shaft on one side of the valve actuating arm and a long-event cam follower on the other side. The valve actuating arm and the short-event cam follower are permanently coupled to the rocker shaft, whereas the long-event follower is controllably engaged or disengaged to the rocker shaft, thereby facilitating simultaneous actuation of the two intake valves at two different duration of events depending upon the operating condition of the engine. Identical arrangement is provided for the exhaust valves.

The camshafts are driven by variable cam phasers to provide independently phaseable camshafts. The phasers are driven by a belt or chain to rotate the camshaft and actuate the valves. The control of the phasers is hydraulic and thus an oil pump transfers oil into the phaser under variable pressure to provide for the desired timing of the valve events in accordance with the engine operating conditions.

The invention will now be described further, by way of example, with reference to the accompanying drawings, in which:
Figure 1 is a cross-sectional view of a cylinder head illustrating a prior art non-variable valve system;
Figure 2 is a cross-sectional view of a cylinder head illustrating a valve train design to which the preferred embodiment of the present invention can be applied;
Figure 3 is a perspective view of a rocker arm assembly in accordance with a preferred embodiment of the present invention;
Figure 4 is a top view illustration broken away of the rocker arm assembly of Figure 3 in the short-event mode in accordance with a preferred embodiment of the present invention;
Figure 5 is a top view illustration broken away of the rocker arm assembly of Figure 3 in the long-event mode in accordance with a preferred embodiment of the present invention;
Figure 6 is a cross-sectional side view of the long-event cam follower assembly of Figure 3 illustrating the long-event cam follower engagement pin and the return spring in accordance with a preferred embodiment of the present invention;
Figure 7 is a top view illustration broken away of the rocker arm assembly with an alternative layout, employing conventional, non-rotating rocker shafts in accordance with a preferred embodiment of the present invention;
Figure 8 is a cross-sectional side view of the long-event follower for the layout with conventional rocker shaft and indicates the location of the long-event arm engagement pin in accordance with a preferred embodiment of the present invention;
Figure 9 is a graph illustrating crank angle versus valve lift for the short-event and long-event cam lobes for the intake and exhaust valves in accordance with a preferred embodiment of the present invention;
Figure 10 is a cross-sectional view of a variable cam phaser in accordance with a preferred embodiment of the present invention; and
Figure 11(a) is a cross-sectional view of a port deactivation valve system, designed for a four valve cylinder head, in an open position in accordance with a preferred embodiment of the present invention;
Figure 11(b) is a cross-sectional view of a port deactivation valve system designed for a four valve cylinder head in a closed position in accordance with a preferred embodiment of the present invention.

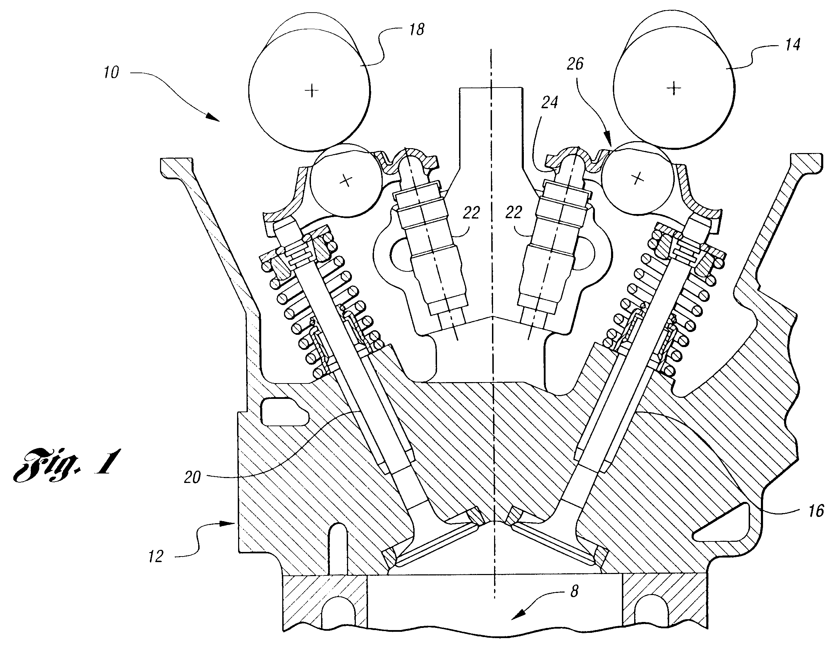

Figure 1 illustrates a prior art non-variable valve system 10. The system includes a dual over head camshaft arrangement with 4 valves per cylinder. This figure is a cross section of the cylinder head through one of the two intake and one of the two exhaust valves. The cylinder head 12 includes an intake camshaft 14 positioned therein for controlling the actuation of the intake valve 16 and a second camshaft 18 also positioned in the cylinder head 12 for controlling the actuation of the exhaust valves 20. As is well known in the art, the intake valves 16 and the exhaust valves 20 regulate the flow of air/fuel mixture to the cylinder 8 and the flow of exhaust from the cylinder 8. The amount of air/fuel mixture and exhaust gas that are present in the cylinder 8 affect the performance and operation of the engine.

Each of the intake valves 16 has a lash adjuster 22 associated therewith to help eliminate any clearance in the valve actuating system and ensure that the intake valves 16 close fully. The lash adjuster 22 is connected at its top end 24 to a roller finger follower (cam follower) 26.

In operation, the roller finger follower 26 follows the cam 14 as it rotates. The roller finger follower 26 pivots about the top end 24 of the lash adjuster 22 to open and close the intake valve 16, depending upon the degree of rotation of the cam 14. Such operation is well known to those of skill in the art.

The operation described above with respect to the intake valves applies equally for the operation of the exhaust valves.

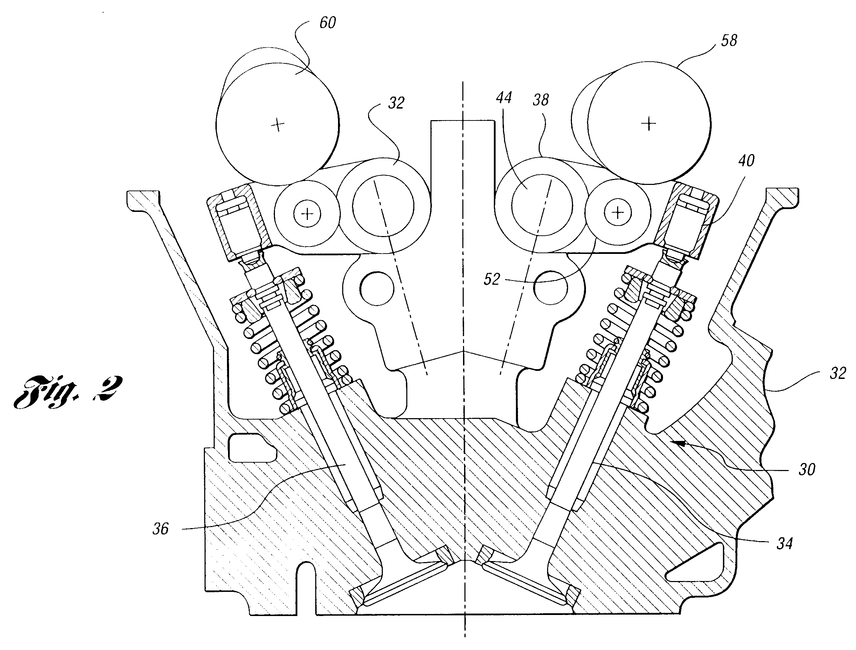

Turning to Figure 2, a variable valve system 30 of the present invention is disclosed and is described in connection with a single cylinder having two intake and two exhaust valves. It should be understood, however, that a system according to the present invention can be used with an engine having more or less than two intake and exhaust valves, also with engines having a single bank of cylinders or multiple banks of cylinders, it also being understood that the present system is merely replicated for additional banks of cylinders.

### Dual Valve Event Duration Mechanism

The valvetrain for the variable valve system is shown on the cross-section of the cylinder head 32 at one of the intake valves 34 and one of the exhaust valves 36. In the cylinder head 32, there are two camshafts 58, 60, one for the actuation of the intake valves 34 and one for the actuation of the exhaust valves 36. The valve actuation system is identical for both the intake and the exhaust valves. The following description applies to the intake valves.

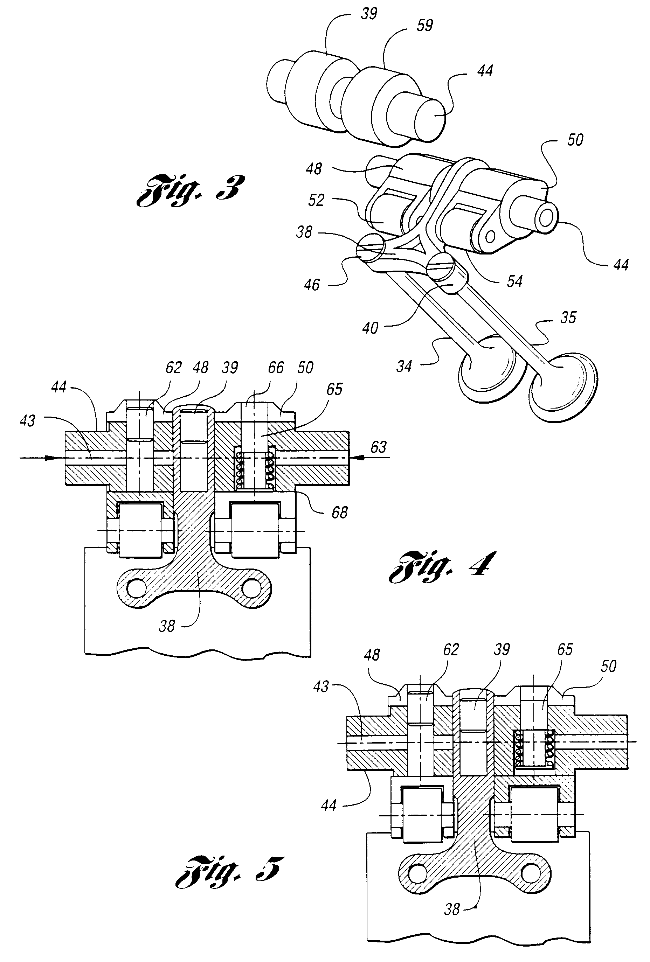

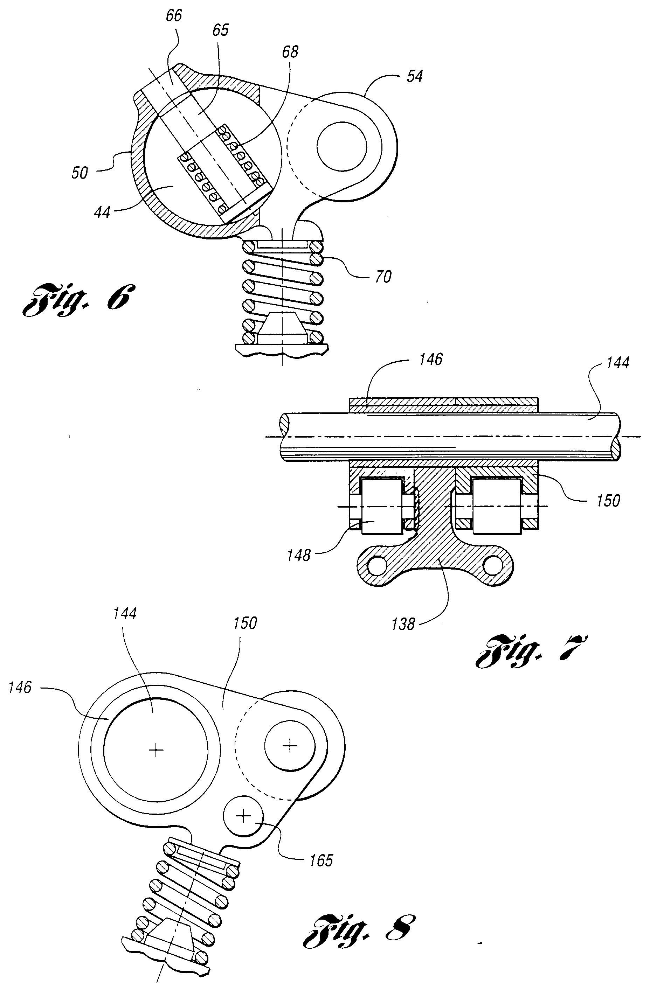

As shown on Figure 3, for each cylinder the intake camshaft is equipped with a short-event cam lobe 39 and a long-event cam lobe 59. The two intake valves 34 and 35 are actuated simultaneously by the valve actuating arm 38 that reaches over the valve tips in the form of a TEE shape. The valve actuating arm 38 has two hydraulic lash adjusters 40, 46 located above the tip of each of the valves to ensure low noise valve actuation and proper closure of the valves. Pressurized oil for the lash adjusters is provided through the left hand side cradle bearing and passage 43 in Figures 4 and 5. The application of hydraulic lash adjusters is optional.

Alternatively, it is possible to design the system so that the variable pressure oil used for the engagement/disengagement of the long-event follower is also utilized for the hydraulic lash adjusters, thereby eliminating the need for two separate oil passages in the cylinder head.

Turning to Figure 4, the intake valve actuating arm 38 is shown to have a TEE shape to facilitate simultaneous actuation of two valves. The valve actuating arm 38 is connected to the cylinder head 32 by rocker shaft 44, that rotates in a pair of cradle bearings (not shown) positioned in the cylinder head 32 at the two ends of the rocker shaft 44. There is one intake and one exhaust rocker shaft for each cylinder. The valve actuating arm 38 is permanently coupled to the rocker shaft 44 via a press fit pin 39, shown on Figures 4 and 5. There is a short-event roller type cam follower 48 located on the rocker shaft on one side of the valve actuating arm 38 and moving in response to the short-event cam lobe 39. The short-event cam follower 48 is permanently coupled to the rocker shaft 44 via a press fit pin 62. Alternately, the short-event cam follower 48 and the valve actuating arm 38 can be configured as a single component permanently coupled to the rocker shaft 44.

As shown on Figures 4 and 5, moving in response to the long-event cam lobe 59, there is a long-event roller type cam follower 50 located rotatably on the rocker shaft 44 next to the valve actuating arm 38 on the other side from the short-event cam follower 48. There is a hydraulically activated radial engagement pin 65 located within the rocker shaft 44. Spring 68 normally holds the engagement pin 65 retracted in the disengaged position. Oil pressure applied through the right hand side cradle bearing into passage 63 forces the engagement pin 65 radially outward into hole 66 situated in the long-event cam follower 50, thus engaging the long-event follower 50 to the valve actuating arm 38. This condition is shown in Figure 5 which depicts the rocker arm assembly in the long-event operating mode.

As shown in Figure 6, the long-event cam follower 50 is equipped with a return spring 70. This return spring 70 ensures that when the long-event follower 50 is disengaged, its roller will remain in continuous contact with the long-event cam lobe surface 59 as opposed to sagging due to gravity or vibrations.

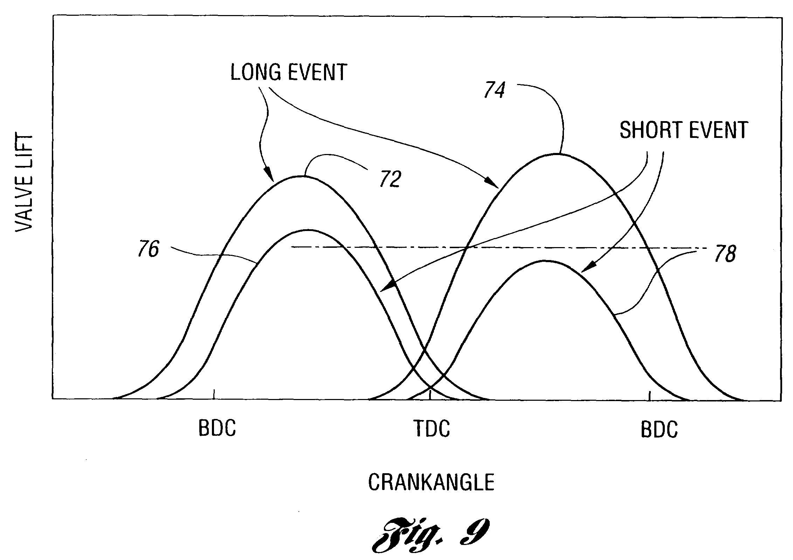

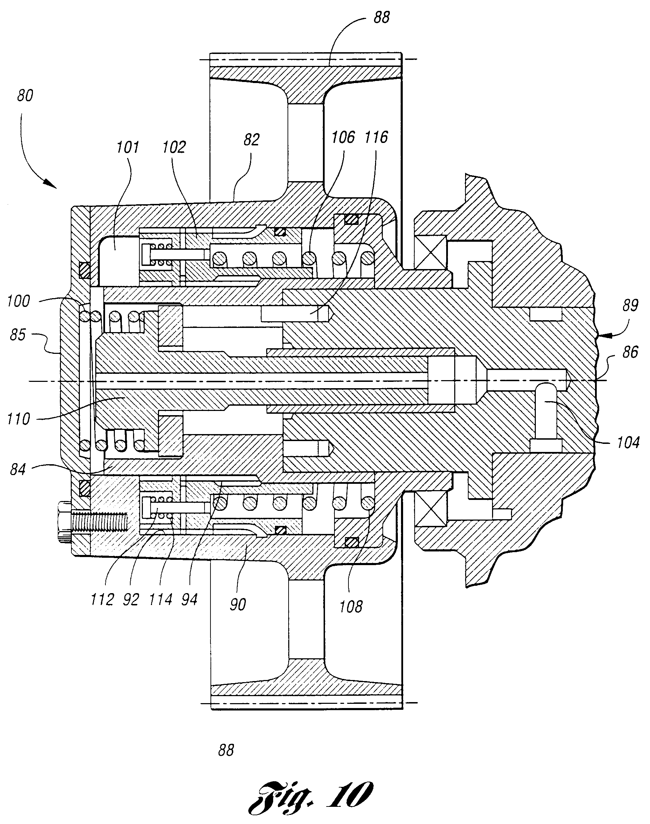

In an alternative arrangement, shown in Figures 7 and 8, one conventional non-rotating intake rocker shaft 144 is applied for all cylinders of one bank. The short-event cam follower 148 is integrated with the valve actuating arm 138. There is a rocker arm sleeve 146 press fitted into the valve actuating arm 138 in order to provide a long and stiff bearing surface for the valve actuating arm 138. The long-event follower 150 is rotatably mounted on the outside diameter of the rocker arm sleeve 146 and this subassembly is rotatably fitted to the conventional rocker shaft 144. The engagement pin 165 is identical in design and function to the one described earlier, except here it is located within the valve actuator arm 138 in a position parallel with the rocker shaft 144. For short-event valve function, the engagement pin 165 is retracted by a return spring (not shown) and when long-event valve function is required, oil pressure is applied to the engagement pin 165 to force it into the hole (not shown) of the long-event follower 150.

Alternatively, it is possible to integrate the valve actuator arm 138 and the rocker arm sleeve 146 into a single component.

As indicated earlier, the valve actuating system for the exhaust valves is identical to that for the intake valves described above.

Figure 9 is a graph plotting valve lift versus crank angle. The valve lift curve 72 on the top left hand side, illustrates the valve lift of the exhaust valve 36 due to the long-event exhaust cam lobe from a crank angle before bottom dead center (BDC) to a crank angle after top dead center (TDC). The valve lift curve 74 on the top right hand side, illustrates the valve lift of the intake valve 34 due to the long-event intake cam lobe 59 from a crank angle of before TDC to after BDC.

The valve lift curve 76 on the bottom left hand side, illustrates the valve lift of the exhaust valve 36 due to the short-event exhaust cam lobe from a crank angle before BDC to a crank angle after TDC. The valve lift curve 78 on the bottom right hand side, illustrates the valve lift of the intake valve 34 due to the short-event intake cam lobe 39 from a crank angle of before TDC to after BDC.

### The Camshaft Phasing Mechanism

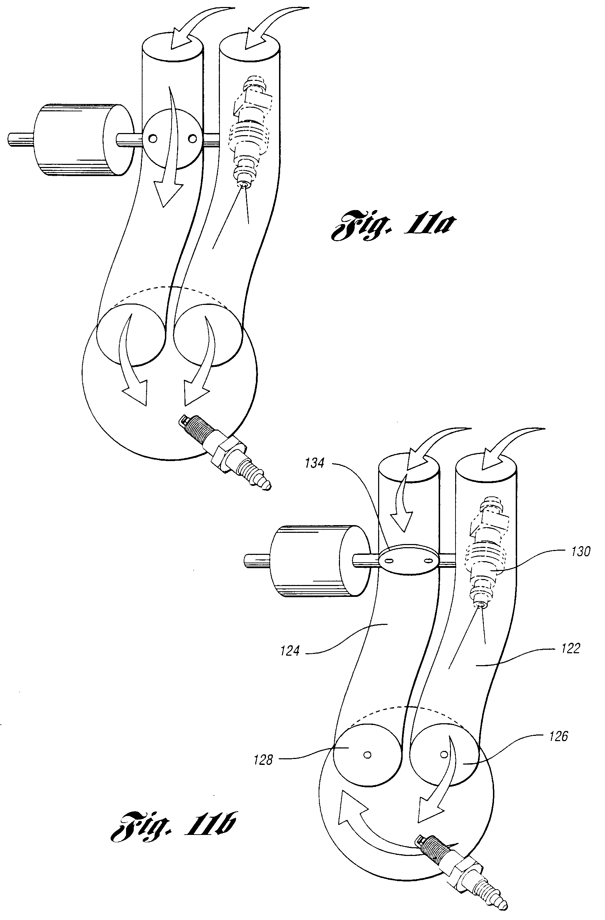

The phasing of the intake camshaft 58 and the exhaust camshaft 60 of the preferred embodiment are also independently and continuously variable by means of a variable camshaft phaser 80 illustrated in Figure 10. In the preferred embodiment, the phaser 80 is designed such that there is about a 60 degree phasing range on intake and about a 55 degree phasing range on exhaust with a time constant for response equal to the time of 5 engine cycles. For hydraulic control, the engine's oil supply can be used. In an alternative embodiment, a small capacity, separate oil pump may be applied to achieve fast response.

The variable cam phaser 80 is mounted on the front end of the camshaft 89 in place of the conventional driving sprocket that provided for fixed phasing. The variable cam phaser consists of an outer housing 82, a camshaft extender 84, a two-piece phaser ring 102, a securing bolt 110, main spring 106, backlash control spring 100, connecting pegs 112, peg springs 114, rear cover ring 108, and front cover plate 85. The phaser 80 is mounted on the front of the camshaft and secured to it by the securing bolt 110. Proper phasing of the camshaft extender 84 to the camshaft 89 is assured by dowel pin 116.

Surrounding and integral with the outer housing 82 is a sprocket 88. The sprocket 88 is driven by a driving means, such as a belt, chain, gear, or other equivalent driving apparatus (not shown). The rotation of the sprocket 88 drives the rotation of the outer housing 82 of the phaser 80 which in turn drives the cam shaft 89, as discussed below. As required for a 4 stroke cycle, there is a 2 to 1 ratio between the camshaft and the crankshaft, i.e., the camshaft runs at one-half the speed of the crankshaft.

The outer housing 82 has helical splines 90 formed on its inside surface 92, while the outer surface of the camshaft extender 84 also has helical splines 94 formed thereon. Connecting the outer housing 82 and the camshaft extender 84 is the two-piece phaser ring 102. Appropriately, the phaser ring 102 has helical splines on its outer surface to mesh with the helical splines 92 on the inner surface of the outer housing 82. Likewise, there are helical splines on the inner surface of the phaser ring to mesh with the helical splines 94 on the outer surface of the camshaft extender 84. The phaser ring 102 is axially displaceable and through the effect of the helical splines axial displacement will result in a phase shift between the outer housing 82 and the camshaft 89.

The camshaft phaser 80 has an oil supply passageway 104 through which oil or other lubricant is introduced into the phaser housing cavity 101 under controlled variable pressure. The pressure of the oil forces the phaser ring 102 to travel from the front cover plate 85 to the right. The movement of the phaser ring 102 is resisted by main spring 106. This arrangement results in the hydraulically controllable phase shift of the camshaft in accordance with the operating strategy detailed further below.

The camshafts drive torque requirement is pulsating, therefore, it is prone to create unacceptable noise if there is backlash in the drive system. The function of the backlash control spring 100 is to eliminate axial backlash between the outer housing 82 and the camshaft extender 84. The function of peg springs 114 is to eliminate backlash in the helical spline system by forcing the two elements of the phaser ring 102 towards each other.

To activate the camshaft phase shifters, a separate oil pump (not shown) may be included for fast actuation of the phase shifting mechanism.

### Intake Charge Motion Control System

Figures 11a and 11b illustrate a port deactivation valve system 120 for the control of the intake charge motion for a four valve cylinder head. This system is preferably included as part of the present invention. The system includes a primary intake port 122 and a secondary intake port 124, and a primary intake valve 126 and a secondary intake valve 128, and a port deactivator valve 134 located in the secondary intake port 124. An injector 130 injects fuel into the primary intake port 122. The deactivator valve is closed under certain operating conditions to induce swirl in the cylinder and accelerate mixing and combustion of the cylinder contents.

As it is well known in the art for cylinder heads with only one intake valve, the intake charge motion can be controlled by an adjustable flow control valve.

Alternatively, the two intake valve cylinder heads can be designed so as to induce a tumbling motion in the cylinder charge with or without externally controllable features. The effect of the tumbling motion is similar to that of swirl.

### Operating Strategy

In order for the engine to perform so as to achieve optimum results throughout the entire operating range, an operating strategy for the valve actuation and the port throttle should be applied. Table 1 shows in specific terms the preferred adjustments across the speed and load range for the subject invention variable valvetrain. One skilled in the art can realize that the exact values for a specific engine may vary from Table 1, depending upon the specific design features and desired operating characteristics of the engine. Below are comments pertinent to six specific operating regions.

When the engine is operating at idle, the short-event cam lobes are utilized such that short intake and short exhaust events are used. The controller adjusts the camshaft timings such that there is zero overlap between the intake valves 34 and the exhaust valves 36. In this condition, the internal EGR is minimized, the effective compression ratio is high, and the swirl, induced by the closed port throttle, enhances the mixing and burning of the cylinder charge. These factors facilitate very low, fuel efficient idle speed with stable combustion.

When the engine is operating at off idle conditions with increasing speed and load, in the vicinity of 1000 rpm 1.0-2.6 BAR, the port throttles remain closed, the intake valves are switched to the long events and the phasings of both cams are gradually retarded, resulting in gradually longer and delayed overlap that increases internal EGR for efficient NOₓ emission control at reduced HC emission levels. Improved fuel efficiency is achieved by a number of factors:
- Delayed opening of the intake valves delays the exposure of the piston to the manifold vacuum.
- Late closing of the intake valves results in a backflow of the cylinder charge into the intake ports, thus reducing the throttling losses.
- Delayed opening of the exhaust valves yields a more complete expansion of the cylinder charge prior to the opening of the exhaust valves.
- The internal EGR through reverse flow from the exhaust ports results in higher EGR temperature and with it higher rates of charge dilution are achievable without incurring combustion instability. The fuel efficiency improvement through charge dilution is well documented in the literature.

Reduced NOₓ emissions result from the higher degree of charge dilution. Reduced HC emissions are due to the fact that the exhaust gas involved in the internal recirculation process is higher in HC emissions than the exhaust gas expelled from the cylinder during the earlier part of the exhaust stroke. The HC in the recirculated exhaust gas is subject to a second oxidizing process.

When the engine operates at moderate speeds just below medium loads in the vicinity of 1500 RPM 2.6-4.0 BAR for both the intake and exhaust valves, the long-event cam lobes are utilized together with the maximum retard for both camshafts. The port throttles remain closed. The subject invention achieves the highest improvement in emissions and fuel efficiency in this operating range and mode. The reasons are the same as for the previously discussed operating region.

When the engine operates at and above medium loads in the vicinity of 1500-2000 RPM 5.5-7.0 BAR, the air intake capability of the engine must be increased. The camshaft retards will be gradually cancelled, first the intake, then the exhaust together, the port throttles will remain, then the valve events will be switched to the short-event cam lobes. The result is gradually reduced EGR and increased air intake for increased torque output capability.

When the engine is running at wide open throttle low and medium speeds, both the intake and exhaust valves are on their short events. The overlap of the valves is short and symmetrical to top dead center. This strategy maximizes the trapped air charge in the cylinder thereby maximizing the WOT torque output capability. The swirl induced by the closing of the port throttle suppresses the detonation thereby facilitating fuel efficient spark timings.

When the engine is operating at wide open throttle high speeds, both the intake and exhaust valves are on the long event, the overlap is long and the port throttles are open. These adjustments will keep the trapped air charge and the torque and power output at high levels by virtue of moderately late intake closing and long overlap, traditional characteristic of high output engines which, however, are not capable of stable low speed idle and high torque output at low RPM.

### Alternative Embodiments

Two examples of alternative embodiments of dual valve events and variable camshaft timing are cited below. These still make use of the synergy accrued by the combining of these concepts, providing a lesser degree of benefits than attainable with the above-described preferred embodiment.

### Dual-Equal Phase Shifting Of The Intake And Exhaust Camshafts

This embodiment utilizes only one phase shifter per cylinder head, but the camshaft drive is arranged so as to apply equal phase shifting of both camshafts. The dual event actuation is retained for both the intake and exhaust valves.

### Dual Valve Event Duration For The Intake Valves Only, Dual-Equal Phasing Of The Camshafts

This embodiment employs dual valve event duration for the intake valves only and employs only one phase shifter effecting equal phase shifting for both the intake and exhaust camshafts. The exhaust valves are actuated with a single valve event duration.

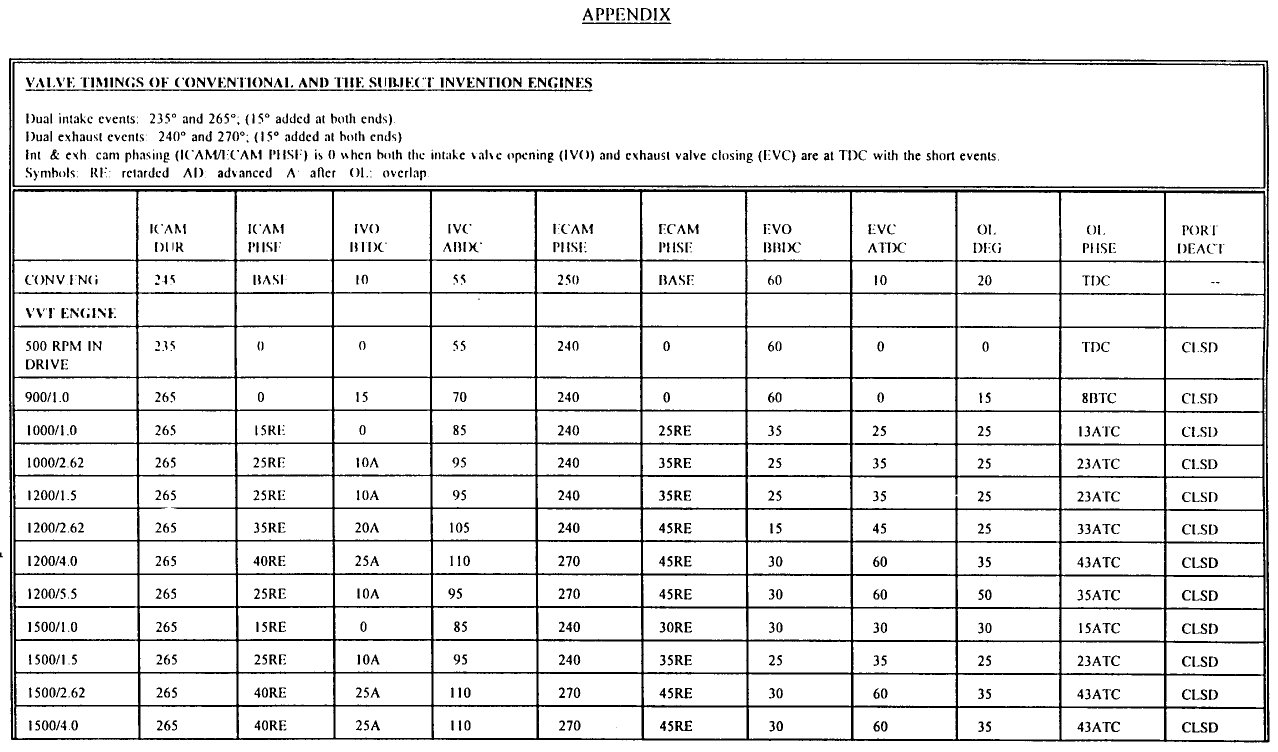

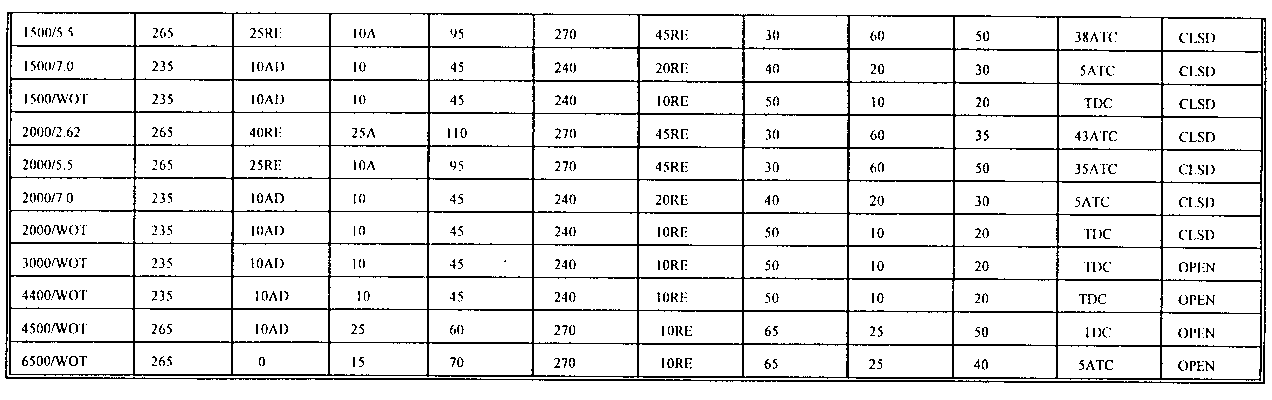

## Claims

1. A reciprocating internal combustion engine, comprising:
a crankshaft mounted within a cylinder block having one or more banks of cylinders with each bank having a cylinder head (32) with a plurality of camshaft operated valves and with at least one intake valve (34) and at least one exhaust valve (36) per cylinder;
a pair of camshafts (58,60) mounted to the cylinder head (32) of each bank of cylinders and driven by said crankshaft with one of said camshafts (58,60) operating said at least one intake valve (34) and said other camshaft operating said at least one exhaust valve (36);
a pair of variable phasers (80) for coupling each of said pair of camshafts (58,60) to said crankshaft for varying the phase relationship between said crankshaft and said camshafts;
at least one short-event intake cam lobe (39) mounted on each of said camshafts (58,60) for each said cylinders;
at least one long-event intake cam lobe (59) mounted on each of said camshafts (58,60) for each said cylinders;
an intake rocker shaft (44) for each of said cylinders rotatably mounted on the said cylinder head (32);
an intake valve actuating arm (38), permanently fixed to each of said rotatable intake rocker shafts (44) for each said cylinder, said arm extending over said at least one intake valve (34) for actuation thereof;
a short-event intake cam follower (48) permanently fixed to said rocker shaft (44) and in communication with said short-event cam lobe (39); and
a long-event intake cam follower (50) rotatably mounted on said rocker shaft (44) in communication with said long-event intake cam lobe (59).

2. A reciprocating internal combustion engine as claimed in claim 1, wherein said rocker shaft includes a radial engagement pin and wherein said long-event cam follower includes a radial hole to receive said engagement pin therein for engagement of the long-event follower to the rocker shaft for actuation of said at least one intake valve in a long-event mode.

3. A reciprocating internal combustion engine as claimed in claim 1, wherein two intake valves are included and wherein said valve actuating arm has a TEE shape to facilitate simultaneous activation of both of said intake valves.

4. A reciprocating internal combustion engine as claimed in claim 1, wherein said long-event intake cam follower includes a return spring to urge said cam follower into engagement with said at least one long-event intake cam lobe.

5. A reciprocating internal combustion engine as claimed in claim 1, wherein said short-event intake cam follower is formed integral with said intake valve actuating arm.

6. A reciprocating internal combustion engine as claimed in claim 1, wherein said short-event intake cam follower and said long-event intake cam follower are equipped with rollers to contact the respective short-event intake cam lobe and long-event intake cam lobe.

7. A reciprocating internal combustion engine as claimed in claim 1, wherein said intake rocker shaft is non-rotatably mounted to said cylinder head and serves all cylinders of a cylinder bank and wherein said engagement pin is located within said valve actuating arm in a position parallel to said rocker shaft for selectively engaging said long-event follower to said valve actuating arm.

8. A variable intake and exhaust valve actuation system for an internal combustion engine, having a plurality of cylinders with each of said cylinders having at least one intake port, comprising:
a plurality of camshafts each having mounted thereon a variable phaser for independent controlling of the phasing of an intake camshaft and an exhaust camshaft;
a short-event cam lobe mounted on each of said intake and exhaust camshafts;
a long-event cam lobe mounted on each of said intake and exhaust camshafts;
a pair of rocker shafts rotatably mounted for each of said plurality of cylinders;
a valve actuating arm mounted on each of said rotatable rocker shafts;
a short-event cam follower permanently fixed to each of said valve actuating arms to activate the intake and/or exhaust valves in a short-event operating mode;
a long-event cam follower rotatably mounted on each of said rocker shafts and capable of being engaged to or disengaged from said valve actuating arm to activate the intake and/or exhaust valves in a long-event operating mode; and
an adjustable port throttle located in each of said intake ports for varying the swirl rate in each of said cylinders.

9. A method for varying the valve timings of an internal combustion engine, comprising the steps of:
providing a crankshaft that is mounted to a cylinder block having one or more banks of cylinders, each bank having a cylinder head;
providing a plurality of variable phasers each in communication with said crankshaft and each including a camshaft connected therewith;
varying the phase relationship between an intake camshaft extending from one of said plurality of variable phasers and an exhaust camshaft extending from another of said plurality of phasers;
providing a short-event intake cam lobe and a long-event intake cam lobe on said intake camshaft;
providing a short-event exhaust cam lobe and a long-event exhaust cam lobe on said exhaust camshaft;
rotatably mounting an intake rocker shaft and an exhaust rocker shaft for said cylinder;
mounting and locking a valve actuating arm on said rotatable intake rocker shaft in communication with at least one intake valve;
providing a short-event intake cam follower and a long-event intake cam follower on either side of said valve actuating arm;
fixing said short-event intake cam follower to said intake rocker shaft to actuate said at least one intake valve in a short-event mode; and
pressurizing an engagement pin within said intake rocker arm forcing said pin into engagement with said long-event intake cam follower to actuate at least one intake valve in a long-event mode.

10. A method as claimed in claim 9, further comprising the steps of:
mounting and locking a valve actuating arm on said rotatable exhaust rocker shaft in communication with at least one exhaust valve;
providing a short-event exhaust cam follower and a long-event exhaust cam follower on either side of said valve actuating arm;
fixing said short-event exhaust cam follower to said exhaust rocker shaft to actuate said at least one exhaust valve in a short-event mode; and
pressurizing an engagement pin within said exhaust rocker arm forcing said pin into engagement with said long-event exhaust cam follower to actuate at least one exhaust valve in the long-event mode.
